(19) Europäisches Patentamt / European Patent Office / Office européen des brevets

(11) **EP 3 153 605 B1**

(12) **EUROPEAN PATENT SPECIFICATION**

(45) Date of publication and mention
of the grant of the patent:
**11.07.2018 Bulletin 2018/28**

(51) Int Cl.:
***C25B 1/00*** *(2006.01)*     ***C01B 32/19*** *(2017.01)*

(21) Application number: **15186329.7**

(22) Date of filing: **22.09.2015**

(54) **METHOD FOR PRODUCING A LAYERED (SEMI-)CONDUCTIVE MATERIAL**

VERFAHREN ZUR HERSTELLUNG EINES GESCHICHTETEN (HALB-) LEITENDEN MATERIALS

PROCÉDÉ DE PRODUCTION D'UN MATÉRIAU STRATIFIÉ (SEMI-)CONDUCTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.04.2017 Bulletin 2017/15**

(73) Proprietor: **Technische Universität Dresden**
**01069 Dresden (DE)**

(72) Inventors:
- **Lohe, Dr. Martin R.**
**01187 Dresden (DE)**
- **Feng, Prof. Xilang**
**01309 Dresden (DE)**
- **Müllen, Prof. Klaus**
**50939 Köln (DE)**
- **Yang, Sheng**
**55124 Mainz (DE)**

(74) Representative: **Kailuweit & Uhlemann Patentanwälte**
**Partnerschaft mbB**
**Bamberger Straße 49**
**01187 Dresden (DE)**

(56) References cited:
**EP-A1- 2 878 709**

- **JIONG LU ET AL: "One-Pot Synthesis of Fluorescent Carbon Nanoribbons, Nanoparticles, and Graphene by the Exfoliation of Graphite in Ionic Liquids", ACS NANO, vol. 3, no. 8, 25 August 2009 (2009-08-25) , pages 2367-2375, XP055029858, ISSN: 1936-0851, DOI: 10.1021/nn900546b**
- **KHALED PARVEZ ET AL: "Electrochemically Exfoliated Graphene as Solution-Processable, Highly Conductive Electrodes for Organic Electronics", ACS NANO, vol. 7, no. 4, 23 April 2013 (2013-04-23), pages 3598-3606, XP055115862, ISSN: 1936-0851, DOI: 10.1021/nn400576v**

# Description

## Technical field of the invention

This invention relates to a method for producing a layered (semi-)conductive material (LSCM), in particular graphene, by electrochemical exfoliation and its use.

## Background of the invention

The exceptional electronic, thermal, optical and mechanical properties of graphene render it a remarkable candidate for the next generation of electronic and optoelectronic devices.[1] Consequently, techniques for the scalable production of high-quality, solution-processable graphene are needed.

First, graphene was obtained by lifting graphene flakes from bulk graphite with adhesive tape and then transferred them onto a silicon wafer.

Among the numerous protocols employed to date, the exfoliation of bulk graphite is most common for harvesting graphene sheets on a large scale because of its low process complexity and costs. Direct exfoliation in the solid state (e.g., scotch-tape cleavage, [2] ball milling, [3,4]) or in a liquid phase (e.g., liquid phase sonication, [5-7] shear force exfoliation [8]), known as physical exfoliation, provides a feasible means for producing graphene with a low number of defects, although in an insufficient yield (< 5 %) and/or with small flake sizes (< 1 $\mu$m). In comparison, chemical exfoliation, which generally relies on Hummers' method, offers a wide range of flexibility for the production of graphene oxide (GO) and related materials because of the potential scalability, impressive conversion efficiency ($\sim$ 100 %), and superior processability. Unfortunately, the unique physical properties of graphene are seriously compromised and cannot be sufficiently recovered, even upon reduction, because of the appreciable fraction of oxygen groups and defects that are left behind. These oxygen groups represent irreversible defects that restrict its usage in fine applications.

Subramanya and Krishna Bhat disclose a chemical exfoliation method using 2,2,6,6-tetramethylpiperidine 1-oxyl (TEMPO) and $H_2O_2$ under microwave irradiation.[11] The mixture containing graphite flakes and TEMPO suspended in hydrogen peroxide is refluxed in a high temperature microwave sintering furnace (2.45 GHz, 1.95 kW). It is reported that TEMPO serves as catalytic oxidant which along with $H_2O_2$ assists in defect generation and intercalation of oxygen moieties along the c-axis of graphite.

Electrochemical exfoliation has recently emerged as a promising strategy for producing graphene on an industrial scale with high efficiency, at low cost and in an environmentally friendly manner.[12] Either cathodic or anodic potentials are able to drive guest ions into graphitic layers, which promotes the structural deformation of a graphite working electrode. Cationic intercalation (mainly in organic electrolytes) does not involve oxidizing conditions, and therefore avoids the decoration of the final products with oxygen containing groups. Unfortunately, in most cases, the produced graphene is in the form of a few layers, and its further isolation requires prolonged sonication (> 10 h) or other multistep treatments (e.g., microwave irradiation).[13-15] Anionic intercalation (primarily in aqueous electrolytes) is less time demanding and can take less than one hour. However, the graphene produced is generally decorated with functional oxygen groups that occur due to the positive/oxidative potentials used, especially with acidic electrolytes as sulfuric acid.[16,17] It is noteworthy that the strong oxidation can be partially alleviated by using aqueous sulfonic salts as electrolytes at milder pH-values.[18] Nevertheless, radicals (especially HO·) generated from water electrolysis will unavoidably disrupt the graphitic structure during the exfoliation process.[12,17,19,20] Therefore, it is highly desirable to eliminate these radicals to ultimately improve the quality of the graphene.

## Technical objective

Therefore, the objective of the invention is primarily to provide a cheap and easy exfoliation method for producing layered (semi-)conductive materials (LSCMs), especially graphene, which is improved in its quality. Another object of the invention is to provide a controllable electrochemical approach for exfoliation of two dimensionally structured bulk materials (2DSBMs), especially graphite in its different physical forms.

## Solution

According to the present invention the objective is solved by a method for producing a layered (semi-)conductive material (LSCM), preferably selected from graphene, carbon based (semi-)conductive polymers, and layered chalcogenides with the following steps:

   a) providing at least a first electrode and a counter electrode in a liquid electrolyte solution,
   wherein at least the first electrode comprises a two dimensionally structured bulk material selected from graphitic materials, carbon based (semi-)conductive polymers and layered chalcogenides of the general formula: $MQ_2$, wherein M is Ti, Zr, Hf, V, Nb, Ta, Mo or W and Q is O, S, Se or Te,
   b) applying an electric potential between the electrodes wherein the electrolyte solution comprises at least one radical scavenger.

The scope of the invention is determined by the appended set of claims.

## Advantages

It has surprisingly been found that the produced layered (semi-)conductive material obtained by the inventive method exhibits large lateral sizes, preferably ranging from 5 $\mu$m to 10 $\mu$m. One particularly advantage of the inventive method is that the obtained layered (semi-)conductive material is characterized by a shape/aspect ratio, which is more than five times larger than common layered (semi-)conductive materials obtained by mechanical exfoliation using shear forces or ultrasonication.

Advantageously the reduced occurrence of defects in the LSCM is outstanding. The reduced number of defects leads advantageously to an increased hole mobility in graphene of >400 cm$^2$V$^{-1}$S$^{-1}$ (as a measure for defect sides in semiconductors).

More advantageously, the method according to the invention is very fast.

The general terms used hereinabove and herein below preferably have the meanings given herein below:

## Detailed Description

Use of the singular herein includes the plural and *vice versa* unless expressly stated to be otherwise. That is, "a" and "the" refer to one or more of whatever the word modifies.

According to the invention the layered (semi-)conductive material (LSCM) is preferably selected from graphene and graphene related materials, especially but not limited to graphene, carbon based (semi-)conductive polymers (such as covalent organic frameworks like covalent triazine frameworks (CTFs) or conductive coordination polymers) and layered chalcogenides of the general formula: $MQ_2$, wherein M is Ti, Zr, Hf, V, Nb, Ta, Mo or W and Q is O, S, Se or Te.

For the purpose of this patent application a "layered (semi-)conductive material (LSCM)" is defined as highly ordered and periodic layer structure of quasi infinite size which is able to conduct an electric current. A Semiconductive material relates to a material that is characterized by band gap, which refers to the energy difference (in electron volts) between the top of the valence band and the bottom of the conduction band and where no electron can exist. Preferably these structures are characterized by a lateral dimension x and a thickness y, wherein the ratio of x to y (shape/aspect ratio) around 100:1 or higher.

Preferred are LSCMs having a lateral dimension x of about 10 $\mu$m and an average thickness y in the range of 0.2 to 100 nm, preferably 0.5 to 50 nm.

Typically, the LSCM comprises n (coordinatively or uncoordinatively attached) layers, wherein n is an integer number from 1 to 50, preferably form 1 to 10, most preferably from 1 to 5.

Typically, one layer of the layered (semi-)conductive material (LSCM) is as thick as a single atom or unit cell/fundamental building block (when referring to layered chalcogenides) as such selected from the group of carbon, oxygen, sulfur, selenium, tellurium and their corresponding negatively charged ions. Preferably, the thickness of one layer is less than 1 nm.

Preferably, the average thickness of a produced layered (semi-)conductive material (LSCM) according to the invention is in the range of up to 100 nm, preferably below 50 nm, most preferably below 10 nm.

Preferably, at least 30% of the produced layered (semi-)conductive material (LSCM) represents a monolayered superlattice, wherein n is 1.

According to a preferred embodiment, the layered (semi-)conductive material (LSCM) is graphene.

Graphene is a two-dimensional material derived from graphite, wherein a single carbon layer describing a two-dimensional honeycomb lattice of sp$^2$ carbon atoms, which is analogous to a polycyclic aromatic hydrocarbon of quasi infinite size. In the present application, the term "graphene" is not limited to a single layer graphene but also encompasses a multi-layer graphene having e.g. up to 10 single graphene layers.

The produced graphene according to the invention is characterized by extremely high carbon to oxygen (C/O) ratios. Preferably, the Oxygen content is in a range from 0 to 7%, more preferably from 1 to 5%.

Advantageously, the produced graphene according to the invention exhibits a remarkably high hole mobility in the range of 350 to 1000 cm$^2$ V$^{-1}$ s$^{-1}$.

Furthermore advantageously, the overall graphene yield, based on the amount of the used two dimensionally structured bulk, is over 50%.

According to a preferred embodiment, the layered (semi-)conductive material (LSCM) is a carbon based (semi) conductive polymer.

According to the present invention, the term "carbon based (semi-)conductive polymer" refers to conductive or semiconductive polymers (e.g., polyanilines, polypyrrole, polyacetylene, poly(phenylene vinylene),polythiophenes or other macromolecules with expanded delocalized electron systems such as polyaromatic hydrocarbons, or organic framework materials such as covalent triazine frameworks (CTFs) or conductive coordination polymers or its pyrolysis and molecular doped products), composites of conductive polymers and non-conductive polymers and composites of conductive polymers and non-conductive materials. According to one preferred embodiment substituted or unsubstituted a conductive covalent organic framework material can serve as the conductive polymer of the present invention. In one embodiment, the conductive polymer is CTF-1 (for explanation see Ref. **21**)

For the sake of clarity, doping hereinafter refers to adding small percentage of an inorganic and/or organic monomolecular interference (e.g. ions ore molecules) into the polymer structure of the conductive polymers. The dopant is preferably an electrical dopant. Electrical dopants are classified in p-dopants and n-dopants. To achieve molecular doping of conductive polymers one or more doping techniques are known to a skilled person in the art or may be available from recent articles.

A covalent organic framework ("COF") refers to a two- or three-dimensional network of covalently bonded multidentate cores bonded wherein the multidentate cores are bonded to one another through linking clusters, preferably these frameworks are electrically conductive such as the covalent triazin frameworks (CTFs) due to their expanded delocalized pi-electron system. The two dimensionally structured bulk material of the first electrode is selected from graphite material, carbon based (semi-)conductive polymer in the form as two dimensionally structured bulk material and layered dichalcogenides of the general formula: $MQ_2$, wherein M is titanium (Ti), zirconium (Zr), hafnium (Hf), vanadium (V), niobium (Nb), tantalum (Ta), molybdenum (Mo) or tungsten (W) and Q is oxygen (O), sulfur (S), selenium (Se) or tellurium (Te). Preferably, the layered chalcogenide is $MoS_2$, $WS_2$, $MoSe_2$, $WSe_2$, $MoTe_2$.

The two dimensionally structured bulk of the first electrode, can be provided in any form which is consistent with its use as an electrode material, e.g. in the form of flakes, rods, foils, fibers, plates, powder or any combination thereof.

The two dimensionally structured bulk can be e.g. a single graphite flake, rods and/or fibers or many flakes, rods or fibers held together, especially by their natural matrix in case of graphite-containing natural ores or by compacting or surface deposition in general. In the latter case, the flakes, rods and/or fibers can be deposited on a conductive surface, physically pressed together or held together using a binder such as a pyrolysed polymer (e.g. an extruded graphite rod).

Preferably, the graphite material used as two dimensionally structured bulk for the first electrode can be in the form of graphite flakes, graphite rods, graphite foils, graphite fibers, graphite powders, mineral graphite, Highly Ordered Pyrolytic Graphite (HOPG) or any combination thereof.

The material of the counter electrode can be chosen from a broad variety of different materials. Herein the counter electrode can be rigid but may also be flexible (e.g. in the form of a foil). Appropriate materials of the counter electrode are selected from conductive materials, preferably metals (such as copper, platinum, gold, nickel, titanium, steel and alloys thereof) graphite, conductive polymers and layered chalcogenides, preferably as defined above.

Moreover, the material of the counter electrode can be a flexible substrate such as a metal foil, alloy foil, foil of a bulk material or any mixture or combination thereof.

For some applications, it might be preferred to have a flexible and porous counter electrode.

The material of the first and/or counter electrode can be porous or non-porous.

The electrolyte solution includes aqueous solutions and organic solutions containing inorganic salts, e.g. ammonium and derivative alkylammonium salts, lithium salts, sulfonate salts, nitrate salts, chloride salts, perchlorates or sulfate salts and derivatives (e.g., amino-sulfate, methyl-sulfate, trifluoro-sulfate), acids. e.g. sulfuric acid and hydrochloric acid, or lyes, such as sodium hydroxide and lithium hydroxide or mixtures thereof.

Advantageously, anionic intercalation, preferably in aqueous electrolytes is less time demanding and takes less than 6 hours, more preferably less than 1 hour.

According to a preferred embodiment of the present invention, the electrolyte solution contains one or more inorganic salts in a concentration of 0.001 M to 10 M, more preferably 0.01 M to 5 M, most preferably 0.1 M to 2 M.

Nevertheless, the electrolyte solution can be also selected from the group of liquid salts, organic liquids, mixtures thereof or aqueous solutions containing them.

Preferably, the electrolyte solution is an aqueous solution containing ammonium sulfate.

Preferred organic liquid electrolyte solution that can be mentioned are e.g. N,N'-dimethylformamide, N-methyl or ethyl pyrrolidone, alcohols (e.g. C1-4 alcohols such as methanol, ethanol or propanol), tetrahydrofuran (THF), acetonitrile, dimethyl sulfoxide (DMSO), propylene carbonate, ketones, or any mixture thereof. As stated above, these organic liquids can also be used together with water in a water/organic solvent mixture.

Preferably, liquid salts are selected from the substance group consisting of phosphonium ionic liquids and imidazolium based ionic liquids. Typically ionic liquids are used in combination with small amounts of water, preferably less than 10%.

Preferably, the two dimensionally structured bulk materialhas a layered structure.

Two dimensionally structured bulk materials, especially carbon containing materials having a layered structure can be e.g. graphite, chemically modified graphite such as a graphite oxide, intercalated graphite, CTF-1 or a mixture thereof.

Other two dimensionally structured bulk materials include transition metal dichalcogenides with the general formula $MQ_2$, wherein M is titanium (Ti), zirconium (Zr), hafnium (Hf), vanadium (V), niobium (Nb), tantalum (Ta), molybdenum (Mo) or tungsten (W) and Q is oxygen (O), sulfur (S), selenium (Se) or tellurium (Te),

Preferably, the layered chalcogenide is $MoS_2$, $WS_2$, $MoSe_2$, $WSe_2$, $MoTe_2$

The term "radical scavenger" relates to an organic or inorganic compound comprising at least one stable free radical that exhibits an outstanding potential to trap/neutralize carbon radicals or free active oxygen radicals.

Preferably, the radical scavenger is an organic compound comprising at least one free electron which is located to a carbon atom (C·), oxygen atom (O·) and/or nitrogen atom (N·). Thus, the radical scavenger preferably comprises an electron binding group in the form of stable paramagnetic nitroxide (N-O·), nitrogen centered radical group (e.g., single N· or neighboring nitrogens) or carbon centered radical group (e.g., triphenylmethyl based derivative). The person skilled in the art knows a variety of usable radical scavengers which comprise such electron binding groups. For example, these radical scavengers are well described in "Stable Radicals: Fundamentals and Applied Aspects of Odd-Electron Compounds" (Ref. **22**).

Depending on nature and stability of the radical scavenger the radical scavenger can be directly added to the electrolyte solution or may be generated *in situ* from radical-forming or -binding compounds.

The useable radical scavenger including but not limited to stable radicals like nitroxide radical, e.g., (2,2,6,6-Tetramethylpiperidin-1-yl)oxyl (TEMPO) and its derivatives, preferably selected from 4-amino-TEMPO, 4-hydroxyl-TEMPO, 4-carboxyl-TEMPO, 4-Hydroxy-TEMPO benzoate , Doxyl derivatives (e.g., 3β-DOXYL-5α-cholestane, 5-DOXYL-stearic acid, 16-DOXYL-stearic acid and Methyl 5-DOXYL-stearate), triphenylmethyl based radicals (e.g., triphenylmethyl radical, bis(4-biphenyl)phenylmethyl, 4-biphenyl)diphenyl-methyl, tris(2,4,6-trichloro-3,5-dinitrophenyl)methyl (HNTTM) and tris(2,3,5,6-tetrachloro-4-nitrophenyl)methyl (TNPTM)), analogues of triarylmethyl radicals, phenalenyl based radicals (e.g., phenalenyl radical, perchlorophenalenyl radical (PCPLY), azaphenalenyl radical (e.g., 1,3-APLY, 1,4-APLY, 1,6-APLY, 1,9-APLY, 1,4,7-APLY, 2,5,8-APLY)), 1,2,3,4,5-pentaphenylcyclopentadienyl radical, 1,2,3,4-tetraphenylcyclopentadienyl radical, di(phenyl)-(2,4,6-trinitrophenyl)iminoazanium (DPPH). The useable radical scavenger also comprises but not limited to radical-forming compounds like *N,N,N',N'*-tetramethyl-p-phenylenediamine (TMPD) or Dimethyl-4-phenylenediamine (DMPD). 2,2'-azino-bis(3-ethylbenzthiazoline-6-sulphonic acid (ABTS), 2,4-Dimethyl-6-tert-butylphenol, 2,6-Di-tert-butylphenol, Butylated hydroxytoluene (BHT), (ethyl-, propyl-, lauryl-, etc)-gallates, tert-Butylhydrochinone (TBHQ), flavonoids e.g. tocopherols), butylated hydroxyanisol or similar radical scavenging species known to the person skilled in the art.

Preferably, the radical scavenger is a nitroxide radical.

Preferably, the radical scavenger concentration in the electrolyte solution is in the range of 0.001 to 20 mg per mL electrolyte solution, more preferably 0.01 to 10 mg per mL, most preferably 0.05 to 5 mg per mL.

The liquid electrolyte may contain one or more additives such as a surfactant, a dispersing additive, an oxidant, a reducing agent, a buffering agent, a complexing agent or any mixture thereof. Alternatively, it is possible that the liquid electrolyte does not contain one or more of these additives, e.g. does not contain a surfactant and/or a dispersing additive.

To avoid restacking of generated layered (semi-)conductive material (LSCM)two or more 2-dimensional supercrystals, the electrolyte solution contains a dispersing additive.

Preferably, the dispersing additive is selected from the substance group comprising carboxamides (e.g., formamide, dimethylformamide, acetamide), ...

Preferably, the dispersing additive is added to the electrolyte solution in a concentration of 0.001 M to 10 M, more preferably 0.01 M to 5 M, most preferably 0.1 M to 2 M.

The layered (semi-)conductive material (LSCM) obtained after the exfoliation procedure in step (b) of the present invention can be separated from the electrolyte solution and be dissolved in a dispersion medium to form a dispersion of LCSM (also called ink).

Preferably, the separation of the obtained and suspended layered (semi-)conductive material from the electrolyte solution can be achieved by size separation, e.g. *via* settling/decanting, centrifugal filtration, cold filtration or vacuum filtration using a membrane filter, a filter paper, a glass frit, fine sieve or Buchner funnel and/or achieved by evaporation of residual electrolyte solutions in gas flow, under vacuum and/or at elevated temperature after the exfoliation procedure.

In a preferred embodiment of the invention, the dispersion medium is selected from the substance group comprising common solvents such as hydrocarbons, aromatic hydrocarbons, halogenated hydrocarbons (e.g. chloroform, dichloroethane), nitro compounds, esters, ethers, CS2, ketones, lactones (e.g. γ-Butyrolactone (GBL)), lactames (e.g. N-methyl-2-pyrrolidone (NMP)), nitrils, carboxamides (e.g., formamide, dimethylformamide, acetamide), sulfoxides, sulfones, alcohols, organic and mineral acids, amines, amides, water and the like. For the formation of a stable printable ink, preferably, the mass fraction of the LCSM used in the dispersion medium of the present invention is suitably between $10^{-2}$ to 50% (w/v), more preferably between 0.1 to 5% (w/v) based on the total weight of the LCSM.

According to one preferred embodiment, the dispersing medium contains a dispersing additive. Advantageously, the dispersing additive avoids restacking of generated layered (semi-) conductive material (LSCM) more efficiently and can also be used to increase stability and the concentration of LSCM containing inks.

Preferably, the dispersing additive is selected from the substance group of surfactants including cationic, nonionic, anionic, and polymer type surfactants (e.g. cetyltrimethylammonium bromide, sodium dodecyl benzene sulfonate, sodium cholate, poly(sodium 4-styrenesulfonate), polyvinylpyrrolidone, Pluronic P-123, TWEEN 80, Triton-X 100 or similar dispersants known to the skilled person).

Preferably, the dispersing additive is added to the electrolyte solution in a concentration of 0.001 M to 10 M, more preferably 0.01 M to 2 M, most preferably 0.1 M to 0.5 M.

The obtained LSCM or LSCM dispersion according to the present invention can be applied onto a substrate by film-forming methods commonly known to the skilled person. Exemplary methods include e.g. Langmuir-Blodgett technique, dip-coating, spin-coating, printing, painting (e.g. brush painting), dry transfer technique (e.g. providing the graphene on a temporary substrate (e.g. by filtration) and then transferring the graphene to the substrate of the layered assembly), self-assembly on appropriate surfaces (e.g. SAM modified), dielectrophoresis, electrodeposition (e.g. for conductive substrates or electrodes), or any combination thereof. Moreover, the produced graphene according to the inventive method can be used for the fabrication of graphene-based thin film (flexible) electrodes.

In another embodiment of the invention, the obtained layered (semi-)conductive material can be incorporated in composite materials by different methods, including melt mixing, solution mixing and in situ polymerization. In addition to these traditional polymer composite preparation methods, other methods are known to the skilled person.

**Literature:**

1 Gwon, H. et al. Flexible energy storage devices based on graphene paper. Energy Environ. Sci. 4, 1277- 1283 (2011).

2 Novoselov, K. S. et al. Electric field effect in atomically thin carbon films. Science 306, 666- 669 (2004).

3 Leon, V., Rodriguez, A. M., Prieto, P., Prato, M. & Vázquez, E. Exfoliation of graphite with triazine derivatives under ball-milling conditions: preparation of few-layer graphene via selective noncovalent interactions. ACS nano 8, 563-571 (2014).

4 Zhao, W., Fang, M., Wu, F., Wu, H., Wang, L. & Chen, G. Preparation of graphene by exfoliation of graphite using wet ball milling. J. Mater. Chem. 20, 5817-5819 (2010).

5 Hernandez, Y. et al. High-yield production of graphene by liquid-phase exfoliation of graphite. Nat. Nanotechnol 3, 563- 568 (2008).

6 Lotya, M. et al. Liquid phase production of graphene by exfoliation of graphite in surfactant/water solutions. J. Am. Chem. Soc. 131, 3611-3620 (2009).

7 Coleman, J. N. Liquid exfoliation of defect-free graphene. Acc. Chem. Res. 46, 14-22 (2013).

8 Paton, K. R. et al. Scalable production of large quantities of defect-free few-layer graphene by shear exfoliation in liquids. Nat. Mater. 13, 624-630 (2014).

9 Hummers, W. S. & Offeman, R. E. Preparation of graphitic oxide. J. Am. Chem. Soc. 80, 1339-1339 (1958).

10 Dreyer, D. R., Park, S., Bielawski, C. W. & Ruoff, R. S. The chemistry of graphene oxide. Chem. Soc. Rev. 39, 228-240 (2010).

11 Subramanya and Krishna Bhat, J. Power Sources 2015, 275, 90-98

12 Low, C. T. J., Walsh, F. C., Chakrabarti, M. H., Hashim, M. A. & Hussain, M. A. Electrochemical approaches to the production of graphene flakes and their potential applications. Carbon 54, 1-21 (2013).

13 Wang, J., Manga, K. K., Bao, Q. & Loh, K. P. High-yield synthesis of few-layer graphene flakes through electrochemical expansion of graphite in propylene carbonate electrolyte. J. Am. Chem. Soc. 133, 8888-8891 (2011).

14 Abdelkader, A. M., Kinloch, I. A. & Dryfe, R. A. W. Continuous electrochemical exfoliation of micrometer-sized graphene using synergistic ion intercalations and organic solvents. ACS Appl. Mater. Interfaces 6, 1632-1639 (2014).

15 Cooper, A. J., Wilson, N. R., Kinloch, I. A., Dryfe, R. A. W. Single stage electrochemical exfoliation method for the production of few-layer graphene via intercalation of tetraalkylammonium cations. Carbon 66, 340-350 (2014).

16 Su, C. Y., Lu, A. Y., Xu, Y., Chen, F. R., Khlobystov, A. N. & Li, L. J. High-quality thin graphene films from fast electrochemical exfoliation. ACS nano 5, 2332-2339 (2011).

17 Parvez, K., et al. Electrochemically exfoliated graphene as solution-processable, highly conductive electrodes for organic electronics. ACS nano 7, 3598-3606 (2013).

18 Parvez, K., Wu, Z. S., Li, R., Liu, X., Graf, R., Feng, X. & Mullen, K. Exfoliation of graphite into graphene in aqueous solutions of inorganic salts. J. Am. Chem. Soc. 136, 6083-6091 (2014).

19 Wei, D., et al. Graphene from electrochemical exfoliation and its direct applications in enhanced energy storage devices. Chem. Commun. 48, 1239-1241 (2012).

20 Lu, J., Yang, J., Wang, J., Lim, A., Wang, S. & Loh, K. P. One-pot synthesis of fluorescent carbon nanoribbons, nanoparticles, and graphene by the exfoliation of graphite in ionic liquids. ACS Nano 3, 2367-2375 (2009).

21 Kuhn, P.; Antonietti, M.; Thomas, A.; Porous, Covalent Triazine-Based Frameworks Prepared by Ionothermal Synthesis. Angew. Chem. Int. Ed., 47, 3450-3453 (2008).

22 Stable Radicals: Fundamentals and Applied Aspects of Odd-Electron Compounds" (R. Hicks, Ed. John Wiley & Sons, 02.08.2011.

**Examples**

The present invention is illustrated in further detail by the following examples and figures without representing a restriction of the scope of protection defined in the claims.

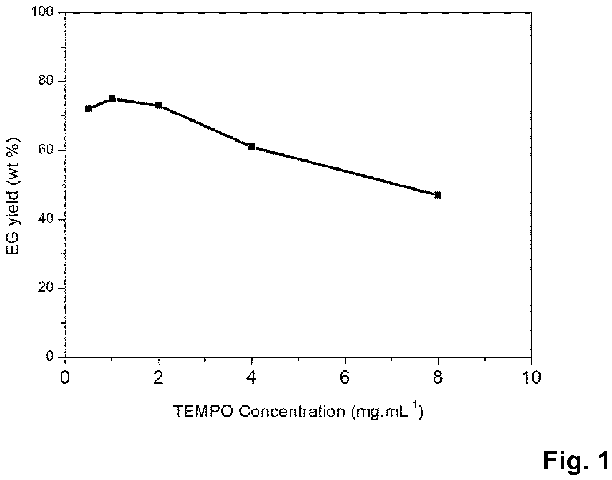

Fig. 1: The relationship between exfoliation yield (wt%) and TEMPO concentration.

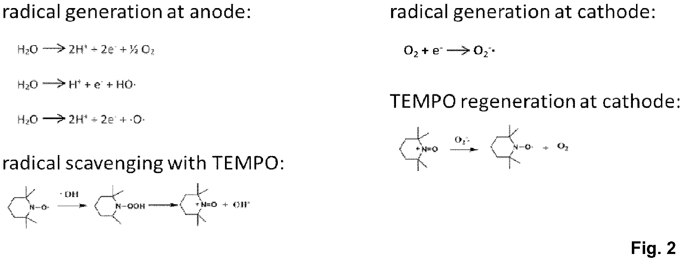

Fig. 2: postulated mechanisms of radical generation in the process and role of TEMPO.

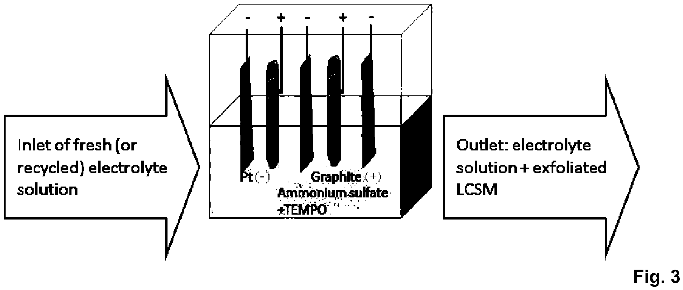

**Fig. 3:**    possible setup for producing graphene using multiple electrodes.

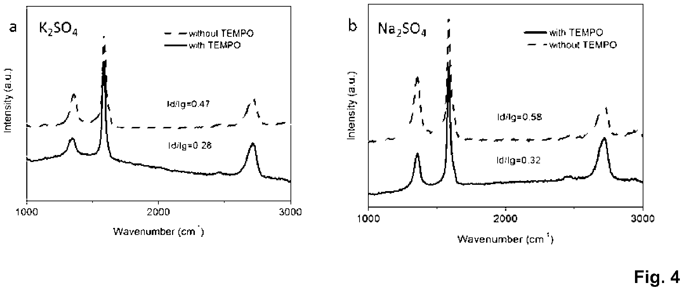

**Fig. 4:**    effect of TEMPO on graphene quality in different aqueous electrolytes measured by RAMAN.

**Fig. 5:**    The alternation of sheet resistance with the change of bending radius (inset: photo-graph of a rolled graphene paper).

**Fig. 6:**    Relationship between the resistance and graphene mass loading.

**Fig. 7:**    Cyclic voltammetry curves of the supercapacitors (graphene mass loading 0.52 mg.cm$^{-2}$) at scan rates from 2-100 mV.s$^{-1}$.

**Characterization of the prepared samples**

SEM images were obtained using a field-emission scanning electron microscope (Gemini 1530 LEO) with an accelerating voltage of 10 keV. HRTEM and SAED were performed using a transmission electron microscope (Philips Tecnai F20). AFM characterization was carried out on a Veeco Nanoscope-IIIa - Multimode Picoforce (Digital Instruments). Raman spectroscopy and mapping was accomplished with a Bruker RFS 100/S spectrometer (laser wavelength 532 nm). XPS analyses were carried out on a Thermo Scientific K-Alpha X-ray photoelectron spectrometer with a basic chamber pressure of between ~ 10$^{-8}$ - 10$^{-9}$ mbar and with an Al anode as the X-ray source (x-ray radiation of 1496 eV). Spot sizes of 400 $\mu$m were used. Survey spectra were recorded with an average of 10 scans, a pass energy of 200.00 eV and a step size of 1 eV. High-resolution spectra were taken with an average of 10 scans with a pass energy of 50.00 eV and a step size of 0.1 eV. The sheet resistances of the EG films were measured with a four-point probe system using a Keithley 2700 multimeter (probe spacing: 0.635 mm, Rs=4.532 V/I).

**Example 1 Electrochemical exfoliation of graphite and preparing a graphene dispersion**

Graphite exfoliation was performed in a two-electrode system, whereby graphite foils were used as working anodes and platinum foils as counter electrodes. Commercial graphite foil (Alfa Aesar) was pre-treated with liquid nitrogen and ethanol to trigger a modest expansion (put into liquid nitrogen for 30 s, quickly picked up and transferred into absolute ethanol, and finally dried in an oven). To avoid short circuits (connections between the graphite and Pt foils) during exfoliation, graphite foils were rolled like rods. The Pt foils were placed parallel to the graphite electrodes at a fixed distance of 2 cm. The electrolyte for the graphite exfoliation was prepared by dispersing ammonium sulfate crystals (0.05 M, 0.660 g) and TEMPO ((2,2,6,6-tetramethylpiperidin-1-yl)oxyl) (50 mg) in 50 mL of deionized (DI) water. In control experiments, ascorbic acid (50 mg), sodium borohydride (50 mg), gallic acid (50 mg), hydrazine monohydrate (50 mg) or hydrogen iodide (50 mg) was added to 50 mL of ammonium sulfate aqueous electrolyte (0.1 M), instead of TEMPO. A short sonication step (5 min, in an ice bath) was required to make a well-dispersed solution. When the electrodes were immersed in the electrolyte, a static potential of 10 V was applied to start the electrochemical exfoliation process. When the exfoliation was complete, the suspended graphene sheets were collected with a 0.2 $\mu$m PTFE membrane filter and washed alternatively with DI water and ethanol by vacuum filtration. The washing process was repeated three times to clear any chemical residues. Later, the dark-gray product was dispersed in N,N-dimethylformamide (DMF) via mild sonication (15 min, in an ice bath). This homogeneous suspension sat overnight to remove un-exfoliated flakes and large particles. Then, the supernatant was taken out for further measurement and ultimately device fabrication.

**Example 2 Graphene paper for flexible supercapacitors**

Exfoliated graphene (EG) powder (600 mg) obtained by the method according to example 1 was dispersed in 100 mL dimethylformamide (DMF; concentration of 6 mg mL$^{-1}$) by ice-bath sonication for 30 min. The black dispersion was painted on a commercial A4-size printing paper using a paintbrush. After this EG-coated paper was dried in an oven, a second layer was painted. The painting and drying process was repeated several times to achieve sufficient mass loading (0.20 - 0.50 mg cm$^{-2}$). The sheet resistance of the graphene paper was recorded using a four-point probe system. To make devices for supercapacitors, a polyvinyl alcohol (PVA)/H$_2$SO$_4$ gel was uniformly coated onto the graphene paper (1 cm$\times$3 cm, EG loading ~ 0.5 mg cm$^{-2}$), then left to stand for 24 hours. Afterward, two pieces of graphene paper were stacked (active area 1 cm$\times$1 cm) without a separator or current collector. To excite the LED light, six small devices were connected in a row. These all-solid-state flexible supercapacitors were eventually used for electrochemical characterization. The area capacitance value was obtained from the cyclic voltammetry data using the following equation:

$$C_{area} = \frac{1}{v(V_f - V_i)A} \int_{V_i}^{V_f} I(V)dV$$

(where C area is the area capacitance based on graphene electrode (F cm$^{-2}$), v is the scan rate (V s$^{-1}$), $V_f$ and $V_i$ are the intergration potential limits of the voltammetric curve, I(V) is the voltammetric discharge current (A), and A is the active area (cm$^2$) of the devices).

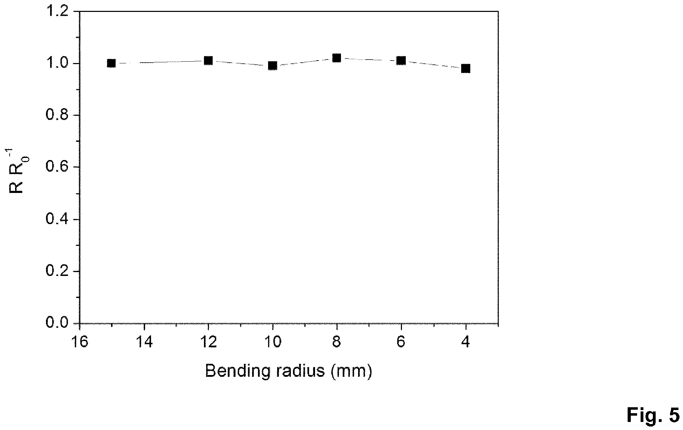

All results are summarized in **Figure 5.**

**Example 3 Electrical properties**

The electrical properties of both single Exfoliated graphene (EG) layers and continuous thin films (tens of nanometers thick) were evaluated using field-effect transistor and sheet resistance measurements, respectively. The mobility extracted from the transfer curves is $\sim 405\ cm^2\ V^{-1}\ s^{-1}$, which is substantially greater than that of reduced graphene oxide ($123\ cm^2\ V^{-1}\ s^{-1}$) and electrochemically exfoliated graphene in sulfuric acid ($233\ cm^2\ V^{-1}\ s^{-1}$) or ammonium sulfate aqueous solution ($310\ cm^2\ V^{-1}\ s^{-1}$) [18] The sheet resistance (Rs), measured from the two-terminal I-V traces, is $1.91\ k\Omega\ sq^{-1}$. This value is comparable to some undoped CVD-grown graphene samples. Continuous graphene films were prepared by filtering a dilute graphene dispersion and then mechanically compressing it. The thickness of the films could be easily adjusted by tuning the volume and concentration of the starting dispersion. The transparency was monitored by UV spectroscopy at 550 nm. Thin graphene films (10 nm) exhibited a transparency of 85%, which is comparable to that of commercial ITO glass (90% in the visible region). The Rs was measured after the samples were annealed at a low temperature (200°C) overnight to remove any residual solvents. The average value recorded by a four-probe system was $9.47\ k\Omega\ sq^{-1}$ and $3.91\ k\Omega\ sq^{-1}$ for films with a thickness of 10 nm and 20 nm, respectively. Because nitric acid ($HNO_3$) is effective for p-doping graphene films, 37 after treatment with $HNO_3$ (65%, 2 hours), the doped EG films displayed Rs values of 1.10 and $0.51\ k\Omega\ sq^{-1}$, respectively, and maintained their optical transparency. The high transparencies of these conductive EG films compared well with those of graphene films that were made from the thermal intercalation-exfoliation approach or via the thermal reduction of graphene oxide.

**Example 4 application in printable flexible application**

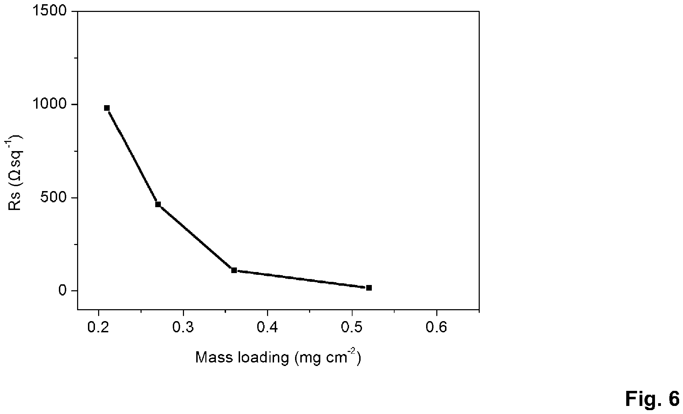

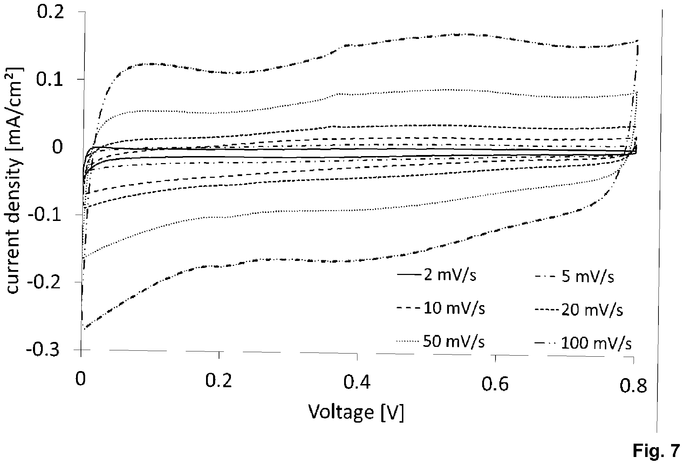

To explore the application of such high-quality graphene in printable flexible electronics, a concentrated dispersion of Exfoliated graphene (EG) obtained by the method according to example 1 in DMF ($6.0\ mg\ mL^{-1}$), herein defined as graphene ink, was freshly prepared and deposited on a commercial A4 paper by brush painting. The resulting graphene paper displayed outstanding flexibility because it could be bent arbitrarily without breaking (Fig. 5). A bending test of the graphene paper also demonstrated that the electrical conductivity remained nearly the same when the radius was reduced from 15 mm to 4 mm. Moreover, the resistance of the graphene paper varied with different graphene loading. Figure 6 shows that the resistance dropped from $980\ \Omega\ sq^{-1}$ to $15\ \Omega\ sq^{-1}$ with an increase of the EG mass loading from $0.21\ mg\ cm^{-2}$ to $0.52\ mg\ cm^{-2}$, respectively. This superior conductivity at high loading is comparable to that of carbon nanotube paper. In view of such controllable mass loading, the graphene paper holds great promise for the fabrication of flexible solid-state supercapacitors. In this case, the paper serves as a flexible substrate, and its porous structure allows for the diffusion of electrolyte ions, thus avoiding the use of any binders or additives. Towards this end, two graphene papers (mass loading: $0.52\ mg\ cm^{-2}$) were integrated together with a layer of solidified conductive gel (poly(vinyl alcohol)/sulfuric acid) to assemble an all-solid-state supercapacitor. In a cyclic voltammetry test, this flexible graphene paper-based supercapacitor showed typical double-layer capacitive behavior at various scan rates (Fig. 7). The calculated capacitance per geometric area was $11.5\ mF.cm^{-2}$ (scan rate: $2\ mV\ s^{-1}$), which is much higher than that of reduced graphene oxide (rGO)-cellulose paper supercapacitors ($7.6\ mF\ cm^{-2}$). The residual oxygen-containing groups and defects on rGO are major barriers to high electrochemical performance. To examine the possible practical applications, six small paper supercapacitors (active area: $2\ cm^2 \times 6$) were connected in series, and the assembled device had the capability to light up a red light-emitting diode (LED) at 2.5 V.

**Claims**

1. Method for producing a layered (semi-)conductive material with the following steps:

   a) providing at least a first electrode and a counter electrode in an liquid electrolyte solution, wherein at least the first electrode comprises a two dimensionally structured bulk material having a layered structure and selected from the group consisting of graphite materials, carbon based (semi-)conductive polymers and layered dichalcogenides,
   b) applying an electric potential between the electrodes,

   wherein the electrolyte solution comprises at least one radical scavenger.

2. Method according to claim 1, wherein the radical scavenger concentration is in the range of 0.001 to 2 mg/mL.

3. Method according to claim 1 or 2, wherein the electrolyte solution is selected from aqueous solutions containing inorganic salts, acids or lyes, liquid salts, organic liquids or mixtures thereof.

4. Method according to one of the claims 1 to 3, wherein the layered chalcogenides have the general formula: $MQ_2$, wherein M is Ti, Zr, Hf, V, Nb, Ta, Mo or W and Q is O, S, Se or Te.

5. Method according to one of the claims 1 to 4, wherein the radical scavenger is an organic compound that comprises at least one free electron which is located to a carbon atom, oxygen atom or nitrogen atom.

6. Method according to claim 5 wherein the radical scavenger comprises an electron binding group in the form of stable paramagnetic nitroxide, a nitrogen centered radical group or carbon centered radical group.

7. Method according to claims 1 to 6, wherein the radical scavenger is selected from the substance group consisting of azaphenalenyl radical, 1,2,3,4,5-pentaphenylcyclopentadienyl radical, 1,2,3,4-tetraphenylcyclopentadienyl radical, di(phenyl)-(2,4,6-trinitrophenyl)iminoazanium (DPPH).

8. Method according to claims 1 to 6, wherein the radical scavenger is selected from the substance group consisting of radical-forming compounds selected from *N,N,N',N'*-tetramethyl-*p*-phenylenediamine (TMPD), Dimethyl-4-phenylenediamine (DMPD), 2,2'-azino-bis(3-ethylbenzthiazoline-6-sulphonic acid (ABTS), 2,4-Dimethyl-6-tert-butylphenol, 2,6-Di-tert-butylphenol, Butylated hydroxytoluene (BHT), ethyl-, propyl- or lauryl-gallates, tert-Butylhydrochinone (TBHQ), flavonoids, preferably tocopherols, and butylated hydroxyanisol.

9. Method according to one of the claims 1 to 8, wherein electrolyte solution contains a dispersing additive.

10. Method according to one of the claims 1 to 9, wherein the two dimensionally structured bulk material is in the form of flakes, rods, foils, fibers, powder or any combination thereof.

11. The use of a radical scavenger to produce graphene that is **characterized by** an oxygen content between 0 and 7 % and wherein hole mobility is in the range of 350 to 1000 cm$^2$ V$^{-1}$ s$^{-1}$.

12. The use of a radical scavenger as an additive for the electrochemical exfoliation of two dimensionally structured bulk materials having a layered structure and selected from the group consisting of graphite materials, carbon based (semi-)conductive polymers and layered dichalcogenides.

**Patentansprüche**

1. Verfahren zum Herstellen eines geschichteten (halb-)leitenden Materials mit den folgenden Schritten:

   a) Bereitstellen wenigstens einer ersten Elektrode und einer Gegenelektrode in einer flüssigen Elektrolytlösung,
   wobei wenigstens die erste Elektrode ein zweidimensional strukturiertes Grundmaterial umfasst, das eine geschichtete Struktur hat und ausgewählt ist aus der Gruppe, die aus Graphitmaterialien, kohlenstoffbasierten (halb-)leitenden Polymeren und geschichteten Dichalkogeniden besteht,
   b) Anlegen eines elektrischen Potentials zwischen den Elektroden,

   wobei die Elektrolytlösung wenigstens einen Radikalfänger umfasst.

2. Verfahren nach Anspruch 1, wobei die Radikalfängerkonzentration im Bereich von 0,001 bis 2 mg/ml liegt.

3. Verfahren nach Anspruch 1 oder 2, wobei die Elektrolytlösung ausgewählt ist aus wässrigen Lösungen, die anorganische Salze, Säuren oder Laugen, flüssige Salze, organische Flüssigkeiten oder Gemische derselben enthalten.

4. Verfahren nach einem der Ansprüche 1 bis 3, wobei die geschichteten Dichalkogenide die allgemeine Formel MQ$_2$ haben, wobei M Ti, Zr, Hf, V, Nb, Ta, Mo oder W ist und Q O, S, Se oder Te ist.

5. Verfahren nach einem der Ansprüche 1 bis 4, wobei der Radikalfänger eine organische Verbindung ist, die wenigstens ein freies Elektron umfasst, das an einem Kohlenstoffatom, Sauerstoffatom oder Stickstoffatom angeordnet ist.

6. Verfahren nach Anspruch 5, wobei der Radikalfänger eine Elektronenbindungsgruppe in der Form von stabilem paramagnetischem Nitroxid, einer stickstoffzentrierten Radikalgruppe oder einer kohlenstoffzentrierten Radikalgruppe umfasst.

7. Verfahren nach einem der Ansprüche 1 bis 6, wobei der Radikalfänger ausgewählt ist aus der Substanzgruppe, die aus Azaphenalenyl-Radikal, 1,2,3,4,5-Pentaphenylcyclopentadienyl-Radikal, 1,2,3,4-Tetraphenylcyclopentadienyl-Radikal, Di(phenyl)-(2,4,6-trinitrophenyl)iminoazanium (DPPH) besteht.

8. Verfahren nach einem der Ansprüche 1 bis 6, wobei der Radikalfänger ausgewählt ist aus der Substanzgruppe, die aus radikalbildenden Verbindungen besteht, die ausgewählt sind aus N,N,N',N'- Tetramethyl-p-phenylendiamin (TMPD), Dimethyl-4-phenylendiamin (DMPD), 2,2'-Azino-bis(3-ethylbenzthiazolin-6-sulfonsäure (ABTS), 2,4-Dimethyl-6-tert-butylphenol, 2,6-Di-tert-butylphenol, Butylhydroxytoluol (BHT), Ethyl-, Propyl- oder Laurylgallaten, tert-Butylhydrochinon (TBHQ), Flavonoiden, bevorzugt Tocopherolen, und Butylhydroxyanisol.

9. Verfahren nach einem der Ansprüche 1 bis 8, wobei die Elektrolytlösung einen Dispersionszusatz enthält.

10. Verfahren nach einem der Ansprüche 1 bis 9, wobei das zweidimensional strukturierte Grundmaterial in der Form von Flocken, Stäben, Folien, Fasern, Pulver oder einer beliebigen Kombination derselben vorliegt.

11. Verwendung eines Radikalfängers zum Herstellen von Graphen, das durch einen Sauerstoffgehalt zwischen 0 und 7 % gekennzeichnet ist und wobei die Lochbeweglichkeit im Bereich von 350 bis 1000 cm$^2$ V$^{-1}$ s$^{-1}$ liegt.

12. Verwendung eines Radikalfängers als Zusatz für die elektrochemische Exfoliation von zweidimensional strukturierten Grundmaterialien, die eine geschichtete Struktur haben und ausgewählt sind aus der Gruppe, die aus Graphitmaterialien, kohlenstoffbasierten (halb-)leitenden Polymeren und geschichteten Dichalkogeniden besteht.

**Revendications**

1. Procédé de production d'un matériau (semi-)conducteur multicouche comprenant les étapes suivantes :

   a) fourniture d'au moins une première électrode et d'une contre-électrode dans une solution électrolytique liquide,
   dans lequel au moins la première électrode comprend un matériau de base structuré bidimensionnellement ayant une couche structurée et sélectionné parmi le groupe constitué des matériaux graphites, des polymères (semi-)conducteurs à base de carbone et des dichalcogénures multicouche,
   b) application d'un potentiel électrique entre les électrodes,

   dans lequel la solution électrolytique comprend au moins un piégeur de radicaux.

2. Procédé selon la revendication 1, dans lequel la concentration en piégeur de radicaux est dans la plage allant de 0,001 à 2 mg/mL.

3. Procédé selon la revendication 1 ou 2, dans lequel la solution électrolytique est sélectionnée parmi des solutions aqueuses contenant des sels inorganiques, des acides ou des alcalins, des sels liquides, des liquides organiques ou des mélanges de ceux-ci.

4. Procédé selon l'une des revendications 1 à 3, dans lequel les chalcogénures multicouche ont la formule générale : MQ$_2$, où M est Ti, Zr, Hf, V, Nb, Ta, Mo ou W et Q est O, S, Se ou Te.

5. Procédé selon l'une des revendications 1 à 4, dans lequel le piégeur de radicaux est un composé organique qui comprend au moins un électron libre qui est situé sur un atome de carbone, un atome d'oxygène ou un atome d'azote.

6. Procédé selon la revendication 5, dans lequel le piégeur de radicaux comprend un groupe de liaison d'électrons sous forme de nitroxydes paramagnétiques stables, un groupe radicalaire centré sur l'azote ou un groupe radicalaire centré sur le carbone.

7. Procédé selon les revendications 1 à 6, dans lequel le piégeur de radicaux est sélectionné parmi le groupe de substances constitué du radical azaphénalényle, du radical 1,2,3,4,5-pentaphenylcyclopentadiényle, du radical 1,2,3,4-tétraphénylcyclopentadiényle, du di(phényl)-(2,4,6-trinitrophényl)iminoazanium (DPPH).

8. Procédé selon les revendications 1 à 6, dans lequel le piégeur de radicaux est sélectionné parmi le groupe de substances constitué de composés formant radicaux sélectionnés parmi la N,N,N',N'-tétraméthyl-p-phénylènediamine (TMPD), la Diméthyl-4-phénylènediamine (DMPD), l'acide 2,2'-azino-bis(3-éthylbenzthiazoline-6-sulphonique) (ABTS), le 2,4-Diméthyl-6-tert-butylphénol, le 2,6-Di-tert-butylphénol, l'hydroxytoluène butylé (BHT), les gallates d'éthyle, de propyle ou de lauryle, le butylhydroquinone tertiaire (TBHQ), des flavonoïdes, de préférence des tocophérols, et l'hydroxyanisol butylé.

9. Procédé selon l'une des revendications 1 à 8, dans lequel la solution électrolytique contient un additif de dispersion.

10. Procédé selon l'une des revendications 1 à 9, dans lequel le matériau de base structuré bidimensionnellement est sous forme de copeaux, de tiges, de feuilles, de fibres, de poudre ou de toute combinaison de ceux-ci.

11. Utilisation d'un piégeur de radicaux pour produire du graphène qui est **caractérisé par** une teneur en oxygène entre 0 et 7 % et dans laquelle la mobilité des trous est dans la plage allant de 350 à 1000 cm$^2$ V$^{-1}$ s$^{-1}$.

12. Utilisation d'un piégeur de radicaux en tant qu'additif pour l'exfoliation électrochimique des matériaux de base structurés bidimensionnellement ayant une structure multicouche et sélectionnés parmi le groupe constitué des matériaux graphites, des polymères (semi-)conducteurs à base de carbone et des dichalcogénures multicouche.

**Fig. 1**

radical generation at anode:

$$H_2O \longrightarrow 2H^+ + 2e^- + \tfrac{1}{2} O_2$$

$$H_2O \longrightarrow H^+ + e^- + HO\cdot$$

$$H_2O \longrightarrow 2H^+ + 2e^- + \cdot O\cdot$$

radical scavenging with TEMPO:

radical generation at cathode:

$$O_2 + e^- \longrightarrow O_2^-\cdot$$

TEMPO regeneration at cathode:

**Fig. 2**

Fig. 3

**Fig. 4**

**Fig. 5**

**Fig. 6**

**Fig. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GWON, H. et al.** Flexible energy storage devices based on graphene paper. Energy Environ. *Sci.,* 2011, vol. 4, 1277-1283
- **NOVOSELOV, K. S. et al.** Electric field effect in atomically thin carbon films. *Science,* 2004, vol. 306, 666-669
- **LEON, V. ; RODRIGUEZ, A. M. ; PRIETO, P. ; PRATO, M. ; VÁZQUEZ, E.** Exfoliation of graphite with triazine derivatives under ball-milling conditions: preparation of few-layer graphene via selective non-covalent interactions. *ACS nano,* 2014, vol. 8, 563-571
- **ZHAO, W. ; FANG, M. ; WU, F. ; WU, H. ; WANG, L. ; CHEN, G.** Preparation of graphene by exfoliation of graphite using wet ball milling. *J. Mater. Chem.,* 2010, vol. 20, 5817-5819
- **HERNANDEZ, Y. et al.** High-yield production of graphene by liquid-phase exfoliation of graphite. *Nat. Nanotechnol,* 2008, vol. 3, 563-568
- **LOTYA, M. et al.** Liquid phase production of graphene by exfoliation of graphite in surfactant/water solutions. *J. Am. Chem. Soc.,* 2009, vol. 131, 3611-3620
- **COLEMAN, J. N.** Liquid exfoliation of defect-free graphene. *Acc. Chem. Res.,* 2013, vol. 46, 14-22
- **PATON, K. R. et al.** Scalable production of large quantities of defect-free few-layer graphene by shear exfoliation in liquids. *Nat. Mater.,* 2014, vol. 13, 624-630
- **HUMMERS, W. S. ; OFFEMAN, R. E.** Preparation of graphitic oxide. *J. Am. Chem. Soc.,* 1958, vol. 80, 1339-1339
- **DREYER, D. R. ; PARK, S. ; BIELAWSKI, C. W. ; RUOFF, R. S.** The chemistry of graphene oxide. *Chem. Soc. Rev.,* 2010, vol. 39, 228-240
- **SUBRAMANYA ; KRISHNA BHAT.** *J. Power Sources,* 2015, vol. 275, 90-98
- **LOW, C. T. J. ; WALSH, F. C. ; CHAKRABARTI, M. H. ; HASHIM, M. A. ; HUSSAIN, M. A.** Electrochemical approaches to the production of graphene flakes and their potential applications. *Carbon,* 2013, vol. 54, 1-21
- **WANG, J. ; MANGA, K. K. ; BAO, Q. ; LOH, K. P.** High-yield synthesis of few-layer graphene flakes through electrochemical expansion of graphite in propylene carbonate electrolyte. *J. Am. Chem. Soc.,* 2011, vol. 133, 8888-8891
- **ABDELKADER, A. M. ; KINLOCH, I. A. ; DRYFE, R. A. W.** Continuous electrochemical exfoliation of micrometer-sized graphene using synergistic ion intercalations and organic solvents. *ACS Appl. Mater. Interfaces,* 2014, vol. 6, 1632-1639
- **COOPER, A. J. ; WILSON, N. R. ; KINLOCH, I. A. ; DRYFE, R. A. W.** Single stage electrochemical exfoliation method for the production of few-layer graphene via intercalation of tetraalkylammonium cations. *Carbon,* 2014, vol. 66, 340-350
- **SU, C. Y. ; LU, A. Y. ; XU, Y. ; CHEN, F. R. ; KHLOBYSTOV, A. N. ; LI, L. J.** High-quality thin graphene films from fast electrochemical exfoliation. *ACS nano,* 2011, vol. 5, 2332-2339
- **PARVEZ, K. et al.** Electrochemically exfoliated graphene as solution-processable, highly conductive electrodes for organic electronics. *ACS nano,* 2013, vol. 7, 3598-3606
- **PARVEZ, K. ; WU, Z. S. ; LI, R. ; LIU, X. ; GRAF, R. ; FENG, X. ; MULLEN, K.** Exfoliation of graphite into graphene in aqueous solutions of inorganic salts. *J. Am. Chem. Soc.,* 2014, vol. 136, 6083-6091
- **WEI, D. et al.** Graphene from electrochemical exfoliation and its direct applications in enhanced energy storage devices. *Chem. Commun.,* 2012, vol. 48, 1239-1241
- **LU, J. ; YANG, J. ; WANG, J. ; LIM, A. ; WANG, S. ; LOH, K. P.** One-pot synthesis of fluorescent carbon nanoribbons, nanoparticles, and graphene by the exfoliation of graphite in ionic liquids. *ACS Nano,* 2009, vol. 3, 2367-2375
- **KUHN, P. ; ANTONIETTI, M. ; THOMAS, A.** Porous, Covalent Triazine-Based Frameworks Prepared by Ionothermal Synthesis. *Angew. Chem. Int. Ed.,* 2008, vol. 47, 3450-3453
- Stable Radicals: Fundamentals and Applied Aspects of Odd-Electron Compounds. John Wiley & Sons, 02 August 2011